# EUROPÄISCHE PATENTANMELDUNG

(11) **EP 1 097 641 A1**
(43) Veröffentlichungstag der Anmeldung: **09.05.2001**
(21) Anmeldenummer: 00123801.3
(22) Anmeldetag: 02.11.2000
(51) Int. Cl.: A21C 13/02

(54) **Gäranlage mit Gärgutträgern**

(30) Priorität: 03.11.1999 DE 19953052
(71) Anmelder: MIWE Michael Wenz GmbH, 97450 Arnstein (DE)
(72) Erfinder: Bremer, Adam, Dipl.-Ing., 97450 Arnstein (DE)
(74) Vertreter: Böck, Bernhard, Dipl.-Ing.

(57) **Zusammenfassung**

Die Erfindung betrifft eine Gäranlage zur Gärbehandlung von Teigrohlingen, die eine Mehrzahl von Trageinrichtungen umfasst. Die Trageinrichtungen sind durch den Gärraum der Gäranlage bewegbar und dienen dadurch beim Gärvorgang dem Transport der Teigrohlinge im Gärraum. Dabei weist eine Trageinrichtung jeweils eine Gärgutträgeranordnung zur Aufnahme der Teigrohlinge auf. Die Gärgutträgeranordnung ist zum Umladen, insbesondere zum Entladen der Teigrohlinge nach dem Gärprozess, relativ zur Trageinrichtung beweglich. Die Gäranlage zeichnet sich zum einen dadurch aus, dass die Gärgutträgeranordnung einer Trageinrichtung jeweils eine Vielzahl von Teigrohlingen aufnehmen kann, wobei die Teigrohlinge in oder auf der Gärgutträgeranordnung in Form einer im wesentlichen ebenen Anordnung platziert werden, und zum anderen dadurch, dass die Trageinrichtungen jeweils mit Gärgutträgeranordnung einzeln aus der Gäranlage entnehmbar sind.

## Beschreibung

Die Erfindung betrifft eine Gäranlage für das Gären von Teigrohlingen nach dem Oberbegriff des Patentanspruchs 1.

Für die Herstellung von Backwaren, wie beispielsweise von Broten oder Brötchen, insbesondere Backwaren aus hefehaltigen Backteigen, ist es erforderlich, daß der Backteig bzw. die aus dem Backteig geformten Teigrohlinge vor dem eigentlichen Backvorgang für eine gewisse Zeitspanne ruhen und reifen bzw. gären. Beim Gärprozess, der beim gewerblichen bzw. industriellen Backen in einer temperatur- und feuchtigkeitsgeregelten Gärkammer stattfindet, erhalten die Teigrohlinge, unter anderem durch die Stoffwechseltätigkeit der im Teig enthaltenen Hefezellen, zum Backen notwendige Eigenschaften wie bestimmtes Volumen, eine bestimmte Oberflächenbeschaffenheit und Porosität.

Bei gewerblichen bzw. industriellen Backanlagen kommen zumeist Gäranlagen zum Einsatz, die im Durchlaufbetrieb arbeiten. Dies bedeutet, daß die Gäranlage an einer Beschickungsöffnung chargenweise oder kontinuierlich mit Teigrohlingen beschickt wird, die Teigrohlinge dann für die Zeit eines Durchlaufs eines in der Gäranlage beweglichen Fördermittels im klimatisierten Gärraum verbleiben, und nach Ablauf der Gärzeit wiederum chargenweise oder kontinuierlich an einer Entnahmeöffnung der Gäranlage entnommen werden.

Für Aufnahme und Transport der Teigrohlinge im Gärraum während der Gärzeit sind Umlaufförderer bekannt, bei denen zwischen zwei parallel geführten, mit gleicher Geschwindigkeit umlaufenden Förderketten Pendelgehänge angeordnet sind, wobei jedes Pendelgehänge beispielsweise eine langgestreckte Gärrinne oder eine Mehrzahl von Gärkörben aufweist. Die Gärrinnen bzw. Gärkörbe sind dabei zwischen den parallel im Gärraum umlaufenden Förderketten pendelnd so aufgehängt, daß sie unabhängig von momentaner, beispielsweise horizontaler oder vertikaler Laufrichtung der Förderketten und auch an Umlenkstellen der Förderketten stets ihre waagerechte Position beibehalten. Lediglich zum Entladen der Teigrohlinge nach dem Gärvorgang werden die im Pendelgehänge aufgehängten Gärrinnen bzw. Gärkörbe durch einen Anschlag aus ihrer waagerechten Position verschwenkt, wodurch die Teigrohlinge aus den Gärrinnen bzw., Gärkörben herausfallen und von einer sich an die Gäranlage anschließende Fördervorrichtung aufgenommen werden können.

Bei den bekannten Gäranlagen mit Pendelgehänge-Umlaufförderer sind Art, Anordnung, Form sowie Größe der Gärrinnen bzw. Gärkörbe zur Aufnahme der Teigrohlinge konstruktionsbedingt engen Beschränkungen unterworfen. So lassen sich sowohl Gärrinnen als auch länglich-ovale Gärkörbe ― bedingt durch das Pendelprinzip der Aufhängung und durch die Notwendigkeit, die Bewegungsrichtung der Pendelgehänge im Gärraum auf engem Raum umlenken zu müssen ― lediglich quer zur Förderrichtung anordnen. Zudem müssen sowohl Gärrinnen als auch Gärkörbe in Förderrichtung verhältnismäßig schmal gehalten werden, um nicht, beispielsweise beim einseitigen Übergaren, aus dem pendelnden Gleichgewicht ihrer Aufhängung zu geraten, wodurch Teigrohlinge aus ihren Gärformen unkontrolliert herausfallen könnten. Auch können die bekannten Gäranlagen mit Pendelgehänge-Umlaufförderer nicht universell, sondern lediglich für diejenige Auswahl an Backproduktsorten, für die die Anlage bereits konstruktionsseitig ausgelegt wurde, eingesetzt werden. Denn um die Größe der Gäranlage zu begrenzen, sind die bekannten Gäranlagen mit Pendelgehänge-Umlaufförderer oftmals mit lediglich bis zu drei unterschiedlichen Arten oder Größen von Gärrinnen bzw. Gärkörben ausgestattet, die in festem Stückzahlverhältnis und in fester Reihenfolge auf die in der Gäranlage verfügbare Länge der umlaufenden Förderketten verteilt sind. Ohne einen größeren Umrüstaufwand in Kauf zu nehmen, lassen sich mit einer dergestalt ausgeführten Gäranlage lediglich diejenigen Arten, Größen und Formen von Teigrohlingen behandeln, für die die Anlage konstruktiv ausgelegt wurde.

Weiterhin weisen derartige Gäranlagen mit Pendelgehänge-Umlaufförderer nur geringe Flexibilität bezüglich Veränderung von Gärzeit oder Änderungen der Stückzahlverhältnisse zwischen den unterschiedlichen von der Gäranlage handhabbaren Backproduktsorten bzw. Backproduktgrößen auf. Schließlich erlauben derartige Gäranlagen auch nicht die unter bestimmten Bedingungen, so beispielsweise bei kleinen länglichen Backprodukten wünschenswerte Entnahme der Gärprodukte aus der Gäranlage in Längsrichtung der Gärprodukte.

Die ebenfalls bekannten Bandgäranlagen mit mehreren im Gärgehäuse übereinander horizontal angeordneten und einzeln angetriebenen umlaufenden Transportbändern sind zwar flexibler bezüglich Art, Größe, Form sowie Ausrichtung der Teigrohlinge, und erlauben durch ihre unterschiedlich schnell antreibbaren Transportbänder bzw. mehr oder weniger benutzter Zahl der vorhandenen Bänder individuell unterschiedliche Gärzeiten bzw. Stückzahldurchsätze für unterschiedliche Arten von Teigrohlingen. Jedoch fehlt den bei derartigen Bandgäranlagen im teigförmigen Zustand frei auf die ebene Bandoberfläche gesetzten Teigrohlingen der formgebende Halt; die Teigrohlinge laufen breit, insbesondere bei Verwendung von für die Backwarenqualität vorteilhafter weicher Teige, wodurch die Qualität der Backwaren nachteilig beeinflusst wird.

Ausgehend von diesem Stand der Technik ist es die Aufgabe der vorliegenden Erfindung, eine Gäranlage mit Gärgutträger zu schaffen, bei der verschiedenste, den unterschiedlichsten Gärprodukten angepasste Ausführungen von Gärgutträgern in beliebiger Verteilung gemeinsam in der Gäranlage eingesetzt werden können, wodurch in der erfindungsgemäßen Gäranlage unterschiedlichste Gärprodukte produziert werden können, ohne die beschriebenen Nachteile der bekannten Systeme in Kauf nehmen zu müssen.

Diese Aufgabe wird durch eine Gäranlage gemäß der Lehre des Patentanspruchs 1 gelöst.

Vorteilhafte Ausführungsformen der Erfindung sind Gegenstand der Unteransprüche.

Die Gäranlage der Erfindung weist in zunächst an sich bekannter Weise eine Mehrzahl von in einem Gärraum beweglichen Trageinrichtungen auf, mit denen die Teigrohlinge beim Gärvorgang durch den Gärraum bewegt werden können. Dabei weist jede der beweglichen Trageinrichtungen eine Gärgutträgeranordnung für die eigentliche Aufnahme der Teigrohlinge auf, wobei die Gärgutträgeranordnung zum Umladen der Teigrohlinge, insbesondere zum Entladen der Teigrohlinge nach dem Gärvorgang, bewegbar ist.

Erfindungsgemäß zeichnet sich die Gäranlage dadurch aus, daß die Gärgutträgeranordnung der Gäranlage jeweils eine Vielzahl von Teigrohlingen aufnehmen kann, wobei die Teigrohlinge einer Gärgutträgeranordnung in Form einer sich im wesentlichen in einer Ebene erstreckenden Anordnung aufgenommen werden. Damit wird zunächst ermöglicht, insbesondere längliche Teigrohlinge sowohl wie bekannt quer, als aber auch parallel zur Förderrichtung der Trageinrichtung durch den Gärraum zu transportieren. Ferner wird es mit den erfindungsgemäßen, einzeln aus der Gäranlage entnehmbaren Trageinrichtungen der Gäranlage möglich, die Anlage durch Austausch einiger oder aller Trageinrichtungen auch kurzfristig individuell an momentane Anforderungen bezüglich zu produzierender Backprodukte, an momentan vorliegende Stückzahlverhältnisse der unterschiedlich großer oder unterschiedlich geformter Backprodukte, und damit auch an unterschiedliche Gärzeiten für die nunmehr nicht mehr gleichzeitig zu behandelnden, sondern auch nacheinander gärbaren Chargen unterschiedlicher Teigrohlinge anzupassen.

Gemäß einem bevorzugten Ausführungsbeispiel der Erfindung ist die Gärgutträgeranordnung einer Trageinrichtung der Gäranlage in der Art eines endlosen Bandes ausgebildet, das relativ zur Trageinrichtung beweglich an der Trageinrichtung angeordnet ist, wobei auf das obere Trum des beweglichen endlosen Bandes die zu gärenden Teigrohlinge aufgesetzt werden können. Durch die Einsetzbarkeit von Trageinrichtungen, deren Gärgutträgeranordnung dergestalt bandartig ausgebildet ist, können mit der erfindungsgemäßen Gäranlage auch solche Gärvorgänge ausgeführt werden, für die bisher der Einsatz einer Bandgäranlage notwendig war. So ermöglicht der Einsatz eines relativ zur Trageinrichtung beweglichen endlosen Bandes als Gärgutträger eine vollkommen freie Anordnung, Ausrichtung und Positionierung der zu gärenden Teigrohlinge, die zudem von beliebiger Form, Gestalt und Größe sein können. Insbesondere können länglich geformte Teigrohlinge wahlweise quer oder parallel zur Förderrichtung der Trageinrichtungen angeordnet werden, und es wird ferner mit dem relativ zur Trageinrichtung beweglichen endlosen Band das nach dem Gärvorgang stattfindende Umladen der Teigrohlinge auf die sich an die Gäranlage anschließenden Transporteinrichtungen, insbesondere auf Transportbänder, erleichtert.

Zum erleichterten Umladen von Teigrohlingen von einem als Gärgutträger eingesetzten beweglichen endlosen Band auf ein sich an die Gäranlage anschließendes Transportband ist es insbesondere vorteilhaft, wenn das als Gärgutträger dienende endlose Band mit einem Mitnehmer versehen ist, der zum Antrieb des endlosen Bandes beim Umladen der Teigrohlinge auf die Einrichtung zur Weiterförderung dient. Damit ist es nicht erforderlich, daß das als Gärgutträger dienende und in der Trageinrichtung durch den Gärraum transportierbare endlose Band einen eigenen Antrieb für den Umladevorgang besitzt. Vielmehr wird die Eigenbewegung des endlosen Bandes, die ja lediglich beim Umladevorgang erforderlich wird, indirekt durch Kontakt eines am sich anschließenden Transportband angeordneten Vorsprungs mit dem am endlosen Band angeordneten Mitnehmer bewirkt.

Gemäß einer alternativen Ausführungsform der Erfindung weist die Gärgutträgeranordnung, die mittels der Trageinrichtung durch den Gärraum der Gäranlage bewegbar ist, eine Mehrzahl von separaten Gärgutträgern auf, in welche die Teigrohlinge für den Gärprozess einlegbar sind. Dabei sind die Gärgutträger der Gärgutträgeranordnung im wesentlichen linienförmig langgestreckt sowie muldenartig ausgebildet. Jeder der solcherart langgestreckt muldenartigen Gärgutträger kann dann beispielsweise einen im wesentlichen langgestreckt oval ausgebildeten Teigrohling oder eine Mehrzahl von länglich-ovalen bzw. runden Teigrohlingen aufnehmen.

Gemäß einer besonders bevorzugten Ausführungsform der Erfindung sind die langgestreckt muldenartigen Gärgutträger einer Gärgutträgeranordnung beweglich an der durch den Gärraum der Gäranlage bewegbaren Trageinrichtung angeordnet. Die Gärgutträger sind dabei insbesondere jeweils um ihre Längsachse rotatorisch beweglich, d.h. kippbar an der Trageinrichtung angeordnet. Durch die kippbare Anordnung der langgestreckt muldenartigen Gärgutträger in der Trageinrichtung wird insbesondere das Um- bzw. Entladen der Teigrohlinge nach Beendigung des Gärvorgangs in vorteilhafter Weise erleichtert.

Für den Entladevorgang ist es dabei besonders vorteilhaft, wenn die kippbar beweglichen Gärgutträger einer Trageinrichtung dergestalt miteinander über ein Koppelglied verbunden sind, daß das Kippen der Gärgutträger der Trageinrichtung simultan erfolgt. Welcher Art und Ausführung das Koppelglied ist, ist erfindungsgemäß zunächst gleichgültig. So ist es beispielsweise vorstellbar, daß eine auf entsprechende Kettenritzel wirkende Gliederkette als Koppelglied zwischen den einzelnen kippbaren Gärgutträgern eingesetzt wird. Gemäß einer bevorzugten Ausführungsform der Erfindung ist jedoch das für die Bewegungskopplung der Gärgutträger einer Trageinrichtung eingesetzte Koppelglied als Koppelstange ausgebildet. Die Koppelstange ist dabei auf Bolzen gelagert, die, exzentrisch zu den Kippachsen der Gärgutträger, jeweils an den Stirnseiten der Gärgutträger angeordnet sind.

Gemäß einer weiteren alternativen Ausführungsform der Erfindung umfasst die Gärgutträgeranordnung einer Trageinrichtung der Gäranlage jeweils eine Mehrzahl von Traggliedern, die jeweils im wesentlichen linienförmig langgestreckt ausgebildet sind. Dabei ist gemäß einer besonders bevorzugten Ausführungsform an jedem Tragglied der Gärgutträgeranordnung einer Trageinrichtung zumindest eine Gärrinne, eine Gärform oder ein Gärkorb anordenbar, worin ein Teigrohling zum Gären eingelegt werden kann.

Durch den Einsatz solcher Tragglieder für die Gärgutträgeranordnung, wobei an jedem Tragglied wahlweise Gärrinnen, Gärformen oder Gärkörbe angeordnet werden können, lässt sich die erfindungsgemäße Gäranlage noch universeller einsetzen. So ist es beispielsweise möglich, die Tragglieder einer Trageinrichtung mit einer Zusammenstellung von Gärformen oder Gärkörben unterschiedlicher Größe oder Form zu versehen. Weiterhin ist es auch problemlos möglich, verschiedene Trageinrichtungen der erfindungsgemäßen Gäranlage mit Gärformen oder Gärkörben jeweils unterschiedlicher Größe und Form auszustatten, wobei jedoch jede der Trageinrichtungen für sich genommen Gärformen oder Gärkörbe einheitlicher Größe und Form aufweist. Somit kann die erfindungsgemäße Gäranlage durch das Auswechseln von Trageinrichtungen mit einer bestimmten Größe und Form von Gärkörben gegen Trageinrichtungen mit Gärkörben von anderer Form und Größe schnell und auf einfache Weise an die jeweils zu produzierenden Backwaren angepasst werden.

Gemäß einer besonders bevorzugten Ausführungsform der Erfindung sind die Tragglieder, an denen jeweils Gärrinnen, Gärformen oder Gärkörbe anordenbar sind, insbesondere um ihre Längsachse rotatorisch dreh- bzw. kippbar an der Trageinrichtung angeordnet. Hierdurch lassen sich Gärrinnen, Gärformen oder Gärkörbe beim Umladen der Teigrohlinge, insbesondere nach dem Gärvorgang, auf einfache Weise beispielsweise auf ein sich an die Gärvorrichtung anschließendes Transportband entleeren.

Diesbezüglich ist es gemäß einer besonders bevorzugten Ausführungsform der Erfindung vorteilhaft, wenn die einzeln rotatorisch kippbar an der Trageinrichtung angeordneten Tragglieder, an denen wiederum die Gärformen befestigt sind, über ein Koppelglied so miteinander verbunden sind, daß die Kippbewegung aller Tragglieder und damit aller Gärformen einer Trageinrichtung gleichzeitig und synchron erfolgt. In welcher Art oder Form das die Tragglieder einer Trageinrichtung verbindende Koppelglied ausgeführt ist, ist erfindungsgemäß zunächst gleichgültig; gemäß einer bevorzugten Ausführungsform der Erfindung jedoch ist das Koppelglied als die Tragglieder mittels exzentrisch zu den Rotationsachsen der Tragglieder angeordneter Bolzen verbindende Koppelstange ausgebildet.

Im folgenden wird die Erfindung anhand lediglich Ausführungsbeispiele zeigender Zeichnungen näher erläutert. Es zeigt:
- **Fig. 1**: in schematischer Darstellung eine Trageinrichtung einer erfindungsgemäßen Gäranlage mit einer Mehrzahl von kippbaren Gärrinnen;
- **Fig. 2**: in einer der **Fig. 1** entsprechenden Darstellung die Trageinrichtung, geschnitten entlang der in **Fig. 1** angegebenen Schnittlinie A-A;
- **Fig. 3**: in einer den **Fig. 1** und **2** entsprechenden Darstellung eine Trageinrichtung einer erfindungsgemäßen Gäranlage, bei der die Gärkörbe parallel zur Förderrichtung der Trageinrichtung durch den Gärraum der Gäranlage angeordnet sind;
- **Fig. 4**: in einer den **Fig. 1** bis **3** entsprechenden Darstellung eine erfindungsgemäße Trageinrichtung, geschnitten entlang der in **Fig. 3** angegebenen Schnittlinie A-A;
- **Fig. 5**: in einer den **Fig. 1** bis **4** entsprechenden Darstellung eine Trageinrichtung einer erfindungsgemäßen Gäranlage mit einer Mehrzahl von Traggliedern sowie einer Vielzahl von Gärkörben;
- **Fig. 6**: in einer den **Fig. 1** bis **5** entsprechenden Darstellung den Schnitt durch eine erfindungsgemäße Trageinrichtung mit Traggliedern und Gärkörben entlang der in **Fig. 5** angegebenen Schnittlinie A-A;
- **Fig. 7**: in einer den **Fig. 1** bis **6** entsprechenden Darstellung eine Trageinrichtung einer erfindungsgemäßen Gäranlage mit einem als Gärgutträger dienenden, beweglichen endlosen Band; und
- **Fig. 8**: in einer den vorstehenden Figuren entsprechenden Darstellung den Querschnitt durch eine erfindungsgemäße Trageinrichtung entlang der in **Fig. 7** angegebenen Schnittlinie A-A.

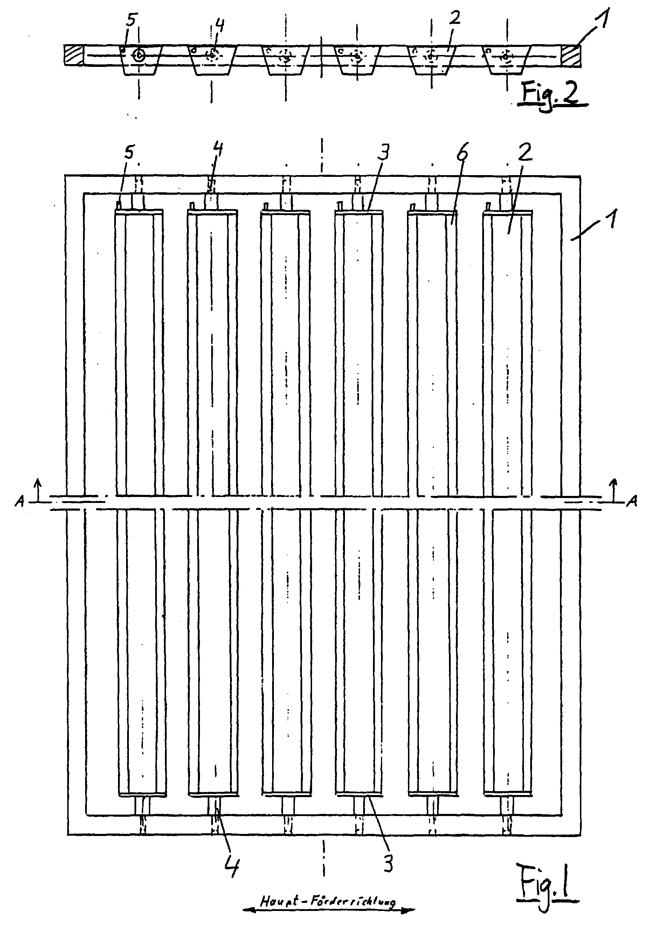

Das in **Fig. 1** höchst schematisch dargestellte erste Ausführungsbeispiel für eine Trageinrichtung 1 einer erfindungsgemäßen Gäranlage weist zunächst eine Mehrzahl von im wesentlichen linienförmig langgestreckt muldenartigen Gärgutträgern 2 auf, die einen im wesentlichen ebenen Boden, schräg gestellte Seitenwände 6 sowie an beiden Enden abschließende Stirnplatten 3 umfassen. Die Gärmulden 2 sind dabei im Querschnitt auf einen bestimmten Gewichtsbereich länglicher Teigrohlinge bzw. Gärprodukte abgestimmt. Die Formhaltung der Gärprodukte ist dabei durch die seitlichen Wände 6 der Gärmulden 2 gewährleistet. Da die Gärmulden 2 keine Unterteilung in Längsrichtung aufweisen, können mit der Trageinrichtung 1 im Rahmen der Länge der Gärmulden 2 beliebige Längen passender Gärprodukte behandelt werden. Die Trageinrichtung 1 wird dabei senkrecht zu den Längsachsen der Gärmulden 2 durch den Gärraum transportiert. Dies bedeutet, daß die in einer erfindungsgemäßen Gäranlage unter Verwendung von Trageinrichtungen gemäß dem vorliegenden Ausführungsbeispiel behandelbaren Teigrohlinge quer zur Förderrichtung der Trageinrichtungen durch den Gärraum liegen und damit auch quer zur Förderrichtung aus der Gäranlage entnommen werden können.

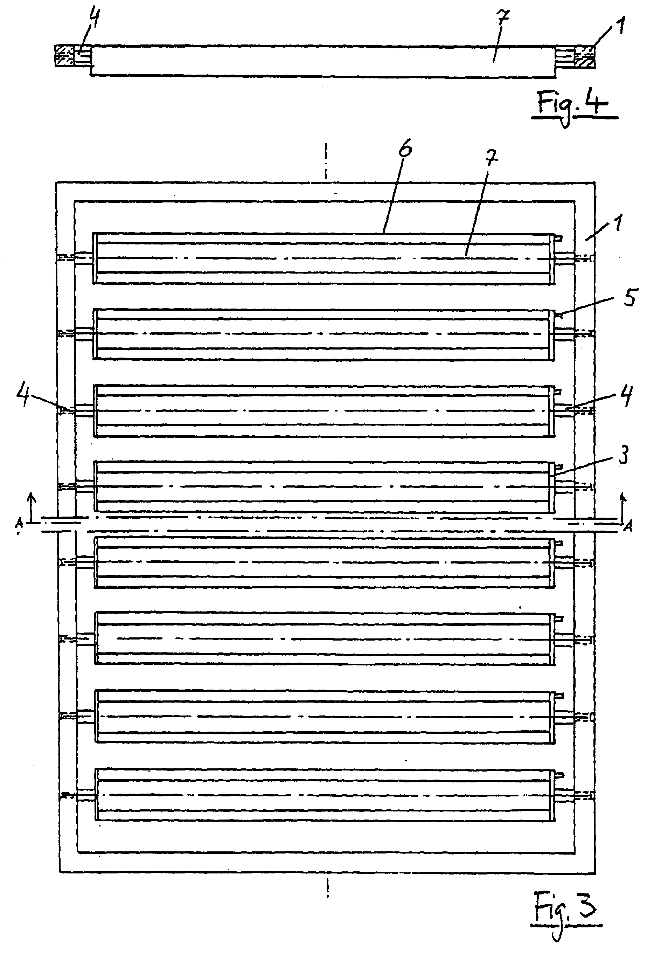

In **Fig. 1** erkennt man weiterhin die auch aus der Querschnittdarstellung gemäß **Fig. 2** ersichtlichen Lagerbolzen 4, die an beiden Enden der Gärmulden 2 mit den dort befindlichen Stirnplatten 3 verbunden sowie jeweils drehbar gelagert an der Trageinrichtung 1 angeordnet sind. Ebenfalls in den **Fig. 1** und **2** dargestellt sind die an jeweils einer der beiden Stirnplatten 3 jeder Gärmulde 2 parallel zur jeweiligen Drehachse der Gärmulde 2 exzentrisch angeordneten Bolzen 5, über die mittels einer nicht dargestellten Koppelstange die Kippbewegung der Gärmulden 2 dergestalt synchronisierbar ist, daß die Kippbewegung, insbesondere beim Um- bzw. Entladen der Teigrohlinge aus den Gärmulden 2, gleichzeitig sowie synchron erfolgt. Die ebenfalls mit Hilfe der exzentrischen Bolzen 5 sowie der nicht dargestellten Koppelstange mögliche Arretierung aller Gärmulden 2 der Trageinrichtung 1 während des Transports durch den Gärraum der Gäranlage ist gegenüber den bekannten Pendelgehänge-Umlaufförderern vorteilhaft insofern, als hier selbst bei nicht mittig eingegebenen Teigrohlingen, bei einseitigem oder unsymmetrischem Übergaren von Teigrohlingen oder beim Klemmen von Lagerbolzen von Gärmulden kein unbeabsichtigtes oder unkontrolliertes Auskippen von Teigrohlingen während des Gärprozesses vorkommen kann.

Die in **Fig. 3** in schematischer Draufsicht sowie in **Fig. 4** im Querschnitt dargestellten Trageinrichtung 1 mit durchgehenden Gärmulden 7, an beiden Enden der Gärmulden 7 angeordneten Stirnplatten 3, Lagerbolzen 4 zur kippbaren Lagerung der Gärmulden 7 in der Trageinrichtung 1 sowie exzentrischen Bolzen 5 zur Aufnahme einer nicht dargestellten Koppelstange entspricht in ihrer Ausführung und Funktion weitestgehend der in den **Fig. 1** und **2** dargestellten Trageinrichtung 1, jedoch sind die Gärgutträger bzw. Gärmulden 7 hier parallel zur Förderrichtung der Trageinrichtung 1 durch den Gärraum einer erfindungsgemäßen Gäranlage angeordnet. Dies führt dazu, daß die hiermit behandelbaren länglichen Teigrohlinge parallel zur Förderrichtung der Trageinrichtung 1 durch die Gäranlage angeordnet werden, sowie nach Abschluss des Gärprozesses ebenfalls parallel zur Förderrichtung durch die Gäranlage aus der Gäranlage entnommen werden können.

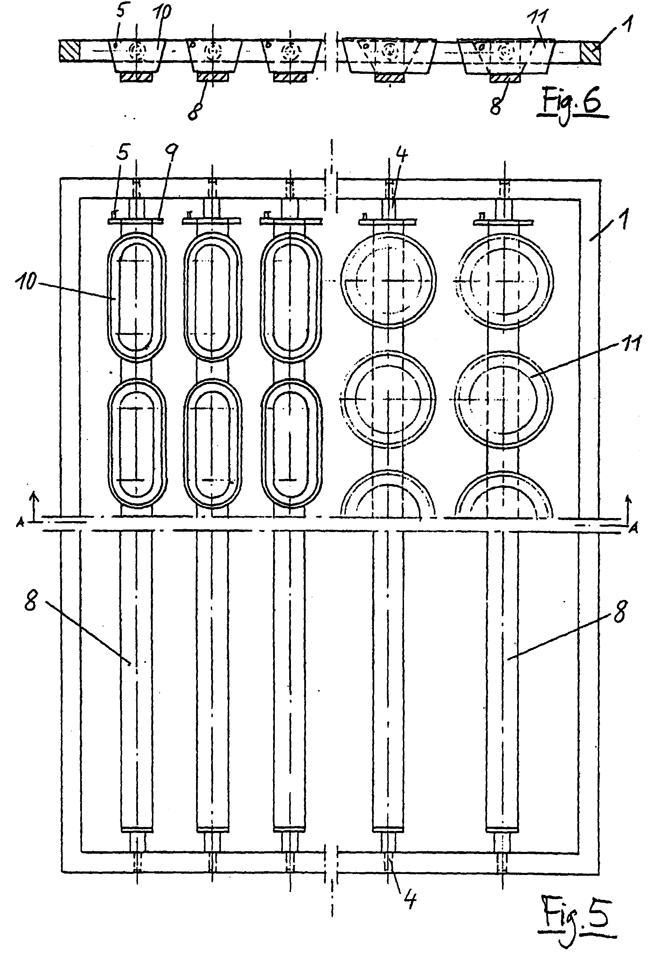

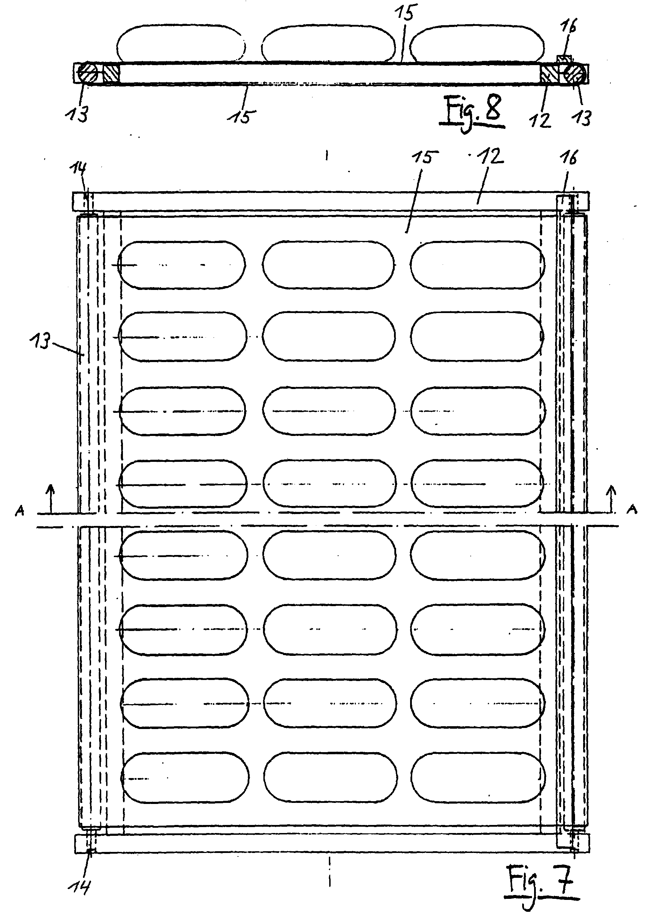

Die **Fig. 5** und **6** zeigen eine weitere Ausführungsform einer erfindungsgemäßen Trageinrichtung 1, bei der die Gärgutträgeranordnung eine Mehrzahl von im wesentlichen linienförmig langgestreckten Traggliedern 8 sowie eine Vielzahl von auf den langgestreckten Traggliedern 8 befestigten Gärgutträgern 10, 11 umfasst. Dabei sind die Tragglieder 8 auf ähnliche Weise wie die Gärmulden 2, 7 in den **Fig. 1** bis **4** mittels Stirnplatten 9, Lagerbolzen 4, exzentrischer Bolzen 5 sowie einer nicht dargestellten, die exzentrisch angeordneten Bolzen 5 verbindenden Koppelstange in der Trageinrichtung 1 um ihre Längsachse jeweils kippbar angeordnet. Im dargestellten Ausführungsbeispiel sind die Tragglieder 8 der Trageinrichtung 1 zu einem Teil mit länglichen Gärkörben 10 und zu einem anderen Teil mit runden Gärkörben 11 bestückt. Im Normalfall wird jedoch jede Trageinrichtung 1 mit vorzugsweise lediglich einer Sorte von Gärkörben 10, 11 bestückt. Eine Trageinrichtung 1 mit einer Gärgutträgeranordnung, die aus einer Vielzahl von kippbaren Gärkörben 10, 11 besteht, kommt dann vorteilhaft zum Einsatz, wenn teigförmig weiche Teigrohlinge in der Gäranlage behandelt werden sollen oder wenn bei den zu behandelnden Gärprodukten auf die Einhaltung einer allseitig festgelegten Formgebung Wert gelegt wird. Im dargestellten Ausführungsbeispiel sind die linienförmig langgestreckten Tragglieder 8 wiederum quer zur Förderrichtung der Trageinrichtungen 1 durch die Gäranlage angeordnet. Selbstverständlich können jedoch die Tragglieder 8 einer Trageinrichtung 1 auch parallel zur Förderrichtung der Trageinrichtung 1 durch die Gäranlage angeordnet werden, wenn dies gemäß dem gewünschteil Entladeprinzip und dem Verfahren der Gesamtanlage, in welche die Gäranlage eingebunden ist, erforderlich sein sollte.

Eine weitere Ausführungsform einer Trageinrichtung für eine erfindungsgemäße Gäranlage ist in **Fig. 7** in schematischer Draufsicht sowie in **Fig. 8** im Querschnitt dargestellt. Bei dieser Ausführungsform der Trageinrichtung ist ein außenliegender Rahmen 12 mit zwei parallel angeordneten und im Rahmen 12 mittels Bolzen 14 drehbar gelagerten Rollen 13 ausgestattet. Um die parallel angeordneten, drehbaren Rollen 13 ist ein endloses Band 15 gespannt, dessen oberes Trum den Gärgutträger der Trageinrichtung bildet. Auf dem oberen Trum des endlosen Bandes 15 ist weiterhin eine Leiste 16 befestigt, die an ihren beiden Enden über die Breite des endlosen Bandes 15 hinausragt und als Mitnehmer zum Antrieb des Bandes beim Um- bzw. Entladen der Gärprodukte zwischen dem als Gärgutträger dienenden umlaufenden Band 15 und einer an die Gäranlage jeweils angrenzenden Förderanlage dient, insbesondere beim Umladen der Teigrohlinge auf eine Bandförderanlage. Die Gärprodukte von beliebiger Form, Gewicht und Größe werden frei in Längs- oder Querrichtung auf das als Gärgutträger dienende obere Trum des endlosen Bandes 15 aufgesetzt und starr mit dem die Trageinrichtung bildenden Rahmen 12 durch die Gäranlage gefördert. Bei der Ausgabe der Gärprodukte aus der Gäranlage wird der Rahmen 12 an ein weiterförderndes, nicht dargestelltes Transportband angestellt und das den Gärgutträger bildende Band 15 mittels Anschub an der Förderleiste 16 synchron zum weiterfördernden Transportband in Richtung der Übergabe bewegt, wodurch die auf dem Band 15 liegenden Gärprodukte auf schonende Weise direkt an das weiterfördernde Transportband übergeben werden können.

Mit einer Trageinrichtung gemäß der in den **Fig. 7** und **8** dargestellten Ausführungsform lassen sich neben den skizzierten einzeln und voneinander getrennt auf das den Gärgutträger bildende Band 15 aufgesetzten Gärprodukten vorteilhaft auch die sogenannten angeschobenen Gärprodukte produzieren, die auf dem Gärgutträger nebeneinander und/oder hintereinander ohne Zwischenraum und einander berührend angeordnet werden. Weiterhin kann die Trageinrichtung gemäß der in den **Fig. 7** und **8** dargestellten Ausführungsform auch für solche Gärprodukte eingesetzt werden, die sowohl Gärprozess als auch Backprozess in derselben Gär- und Backform durchlaufen, wie z. B. Kastenbrote.

Selbstverständlich ist die Gäranlage der Erfindung nicht auf den Einsatz der in den **Fig. 1** bis **8** lediglich beispielhaft dargestellten Ausführungsformen von Trageinrichtungen 1, 12 mit ihren jeweiligen Gärgutträgeranordnungen beschränkt, sondern es lassen sich darüber hinaus eine Vielzahl an vorstellbaren Kombinationen von Trageinrichtungen mit an spezifische Bedarfe einer Backstraße angepassten Formen von Gärgutträgern einsetzen. Es ist dabei besonders vorteilhaft, wenn alle in einer erfindungsgemäßen Gäranlage einzusetzenden unterschiedlichen Gärgutträgeranordnungen jeweils mit einer Trageinrichtung versehen sind, die beispielsweise in Gestalt eines Normrahmens mit vorbestimmten Längs- und/oder Querabmessungen ausgebildet ist, so daß die einzelnen Trageinrichtungen mit jeweils unterschiedlichen spezifischen Gärgutträgeranordnungen für den Betrieb der Anlage beliebig gegeneinander ausgetauscht werden können. Hierdurch wird ermöglicht, in Abhängigkeit von den jeweils herzustellenden Backprodukten lediglich solche Trageinrichtungen einzusetzen, die eine Gärgutträgeranordnung mit den für die momentan herzustellenden Backprodukte optimalen Eigenschaften bezüglich Anordnung, Verteilung, Umladeeigenschaften sowie Formhaltung aufweist. Mittels der für eine spezifische Gäranlage auch individuell auslegbaren und dimensionierbaren Trageinrichtungen bzw. Normrahmen und mit den vielfältigen Ausführungsformen der in die Normrahmen einbaubaren speziellen Gärgutträgeranordnungen wird backproduktunabhängig ein universeller Einsatz der erfindungsgemäßen Gäranlage ermöglicht, ohne die diesbezüglichen Einschränkungen der bekannten spezialisierten Gärsysteme übernehmen zu müssen.

Ob die Trageinrichtungen mit den unterschiedlichen Gärgutträgeranordnungen beim Wechsel manuell oder automatisch aus entsprechenden Magazinen entnommen bzw. in dieses zurückgelegt werden, spielt für das Wesen der Erfindung keine Rolle.

## Patentansprüche

1. Gäranlage zur Gärbehandlung von Teigrohlingen mit einer Mehrzahl von beweglichen Trageinrichtungen zum Transport der Teigrohlinge beim Gärvorgang, wobei eine Trageinrichtung jeweils eine Gärgutträgeranordnung zur Aufnahme der Teigrohlinge aufweist und die Gärgutträgeranordnung zum Umladen der Teigrohlinge relativ zur Trageinrichtung bewegbar ist,
dadurch **gekennzeichnet,**
dass durch die Gärgutträgeranordnung einer Trageinrichtung (1) jeweils eine Vielzahl von Teigrohlingen in Form einer im wesentlichen ebenen Anordnung aufnehmbar ist und dass die Trageinrichtungen (1) einzeln aus der Gäranlage entnehmbar sind.

2. Gäranlage nach Anspruch 1,
dadurch **gekennzeichnet,**
dass die Gärgutträgeranordnung nach Art eines relativ zur Trageinrichtung beweglichen endlosen Bandes (15) ausgebildet ist, auf dessen oberes Trum die Teigrohlinge aufsetzbar sind.

3. Gäranlage nach Anspruch 2,
dadurch **gekennzeichnet,**
dass das endlose Band (15) einen Mitnehmer (16) zum Antrieb des Bandes (15) beim Umladen der Teigrohlinge auf eine Fördereinrichtung aufweist.

4. Gäranlage nach Anspruch 1,
dadurch **gekennzeichnet,**
dass die Gärgutträgeranordnung eine Mehrzahl von im wesentlichen linienförmig langgestreckt muldenartigen Gärgutträgern (2, 7) umfasst, in die die Teigrohlinge einlegbar sind.

5. Gäranlage nach Anspruch 4,
dadurch **gekennzeichnet,**
dass die muldenartigen Gärgutträger (2, 7) beweglich, insbesondere um ihre Längsachse rotatorisch kippbar an der Trageinrichtung (1) anordenbar sind.

6. Gäranlage nach Anspruch 4 oder 5,
dadurch **gekennzeichnet,**
dass die Gärgutträger (2, 7) über ein Koppelglied miteinander verbunden sind.

7. Gäranlage nach Anspruch 6,
dadurch **gekennzeichnet,**
dass das Koppelglied als Koppelstange ausgebildet ist.

8. Gäranlage nach Anspruch 1,
dadurch **gekennzeichnet,**
dass die Gärgutträgeranordnung eine Mehrzahl von im wesentlichen linienförmig langgestreckten Traggliedern (8) umfasst.

9. Gäranlage nach Anspruch 8,
dadurch **gekennzeichnet,**
dass an jedem Tragglied (8) zumindest eine Gärrinne, eine Gärform oder ein Gärkorb anordenbar ist, in den ein Teigrohling einlegbar ist.

10. Gäranlage nach Anspruch 8 oder 9,
dadurch **gekennzeichnet,**
dass die Tragglieder (8) beweglich, insbesondere um ihre Längsachse rotatorisch kippbar an der Trageinrichtung (1) anordenbar sind.

11. Gäranlage nach einem der Ansprüche 8 bis 10,
dadurch **gekennzeichnet,**
dass die Tragglieder (8) über ein Koppelglied miteinander verbunden sind.

12. Gäranlage nach Anspruch 11,
dadurch **gekennzeichnet,**
dass das Koppelglied als Koppelstange ausgebildet ist.
